(19) Europäisches Patentamt
European Patent Office
Office européen des brevets

(11) Veröffentlichungsnummer: 0 009 747
B1

(12) # EUROPÄISCHE PATENTSCHRIFT

(45) Veröffentlichungstag der Patentschrift: 10.03.82

(51) Int. Cl.³: C 08 F 283/02, C 08 G 63/64

(21) Anmeldenummer: 79103594.2

(22) Anmeldetag: 24.09.79

(54) **Pfropfpolycarbonate und ihre Herstellung.**

(30) Priorität: 04.10.78 DE 2843154

(43) Veröffentlichungstag der Anmeldung: 16.04.80 Patentblatt 80/8

(45) Bekanntmachung des Hinweises auf die Patenterteilung: 10.03.82 Patentblatt 82/10

(84) Benannte Vertragsstaaten: DE FR GB IT NL

(56) Entgegenhaltungen:
FR-A-1 547 066
FR-A-2 050 322
FR-A-2 342 327
US-A-3 164 564
CHEMICAL ABSTRACTS, Band 81, Nr. 4, 29. Juli 1974, Zusammenfassung Nr. 13988a, Seite 16, rechte Spalte, Columbus, Ohio, USA.

(73) Patentinhaber: BAYER AG, Zentralbereich Patente, Marken und Lizenzen, D-5090 Leverkusen 1, Bayerwerk (DE)

(72) Erfinder: Margotte, Dieter, Dr., Wedelstrasse 48, D-4150 Krefeld (DE)
Erfinder: Nouvertné, Werner, Dr., Scheiblerstrasse 95, D-4150 Krefeld (DE)
Erfinder: Neuray, Dieter, Dr., Buschstrasse 149, D-4150 Krefeld (DE)
Erfinder: Vernaleken, Hugo, Dr., Kreuzbergstrasse 147, D-4150 Krefeld (DE)

EP 0 009 747 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Pfropfpolycarbonate und ihre Herstellung

Gegenstand der vorliegenden Erfindung ist ein Verfahren zur Herstellung von löslichen thermoplastischen Pfropfpolycarbonaten mit Molekulargewichten (Gewichtsmittel $\overline{Mw}$) von 30 000 bis 400 000, dadurch gekennzeichnet, daß man aromatische Polycarbonate mit im Mittel pro Polycarbonatmolekül mindestens einer ungesättigten Endgruppe, die der Formel II entsprechen.

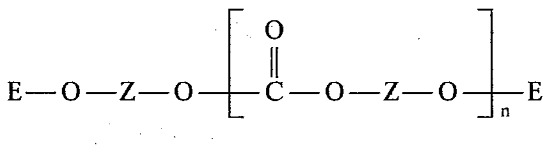

(II)

worin Z = ein Rest eines Diphenols, n = eine ganze Zahl von 30 bis 100 und E der gesättigten Endgruppe der Formel IIIb oder der ungesättigten Endgruppe der Formel IIIa entspricht,

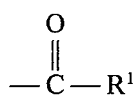

(IIIa)

bzw.

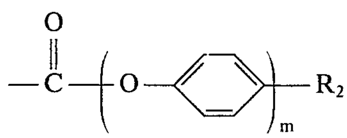

(IIIb)

in der für IIIa $R_1$ =

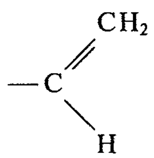

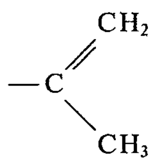

oder

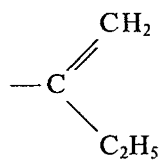

und in der für IIIb m Null und $R_2$ $C_1-C_{18}$-Alkyl oder m 1 und $R_2$=H, Alkyl oder Halogen sind, in Gegenwart eines radikalisch polymerisierbaren Monomeren mittels Lösungspolymerisation polymerisiert, wobei das Gewichtsverhältnis des Ausgangspolycarbonats zu den radikalisch polymerisierbaren Monomeren von 70 : 30 bis 10 : 90 beträgt und wobei die Konzentration der Reaktionslösung an Reaktanten 30 Gew.-%, bezogen auf das Gesamtgewicht aus Polycarbonat mit ungesättigten Endgruppen, radikalisch polymerisierbaren Monomeren und Reaktionsmedium, nicht übersteigt.

Die entstehenden Endprodukte sind verzweigte hochmolekulare thermoplastische Verbindungen, die aus Polycarbonat-Segmenten (PC) und Polymer-Segmenten (PM) aufgebaut sind. Gegenstand der vorliegenden Erfindung sind somit auch die nach dem erfindungsgemäßen Verfahren erhältlichen Pfropfpolycarbonate.

In Chem. Abstracts Band 81, Nr. 4, 29. Juli 1974, Ref. Nr. 13 988a betreffend die japanische Patentanmeldung Nr. 70 121 553 wird die Reaktion von Allylendgruppenhaltigen Polycarbonaten mit Styrol beschrieben. Die erhaltenen Produkte sind transparent und löslich.

In Anbetracht der Tatsache, daß bei der radikalischen Polymerisation die Reaktivität von Acrylverbindungen der von Allylverbindungen klar überlegen ist, war es nicht zu erwarten, daß nach dem erfindungsgemäßen Verfahren ebenfalls lösliche Produkte erhalten werden. Entsprechendes gilt für die Allylgruppen-haltigen Polycarbonate der FR-PS 1 547 066 bzw. der US-PS 8 692 870. Gegenüber der Lehre dieser beiden letzteren Patentschriften besteht zudem noch ein weiterer Unterschied darin, daß die ungesättigten Gruppen über die Polycarbonatketten statistisch verteilt sind, so daß ein Rückschluß auf das erfindungsgemäße Verfahren nicht möglich ist. Dies gilt auch für die Vinylestergruppen-haltigen Polycarbonate gemäß FR-PS 1 547 066 bzw. US-PS 3 692 870.

Gemäß FR-PS 2 342 327 werden aus Acrylgruppen-haltigen aliphatischen Polycarbonaten Klebstoffe, gemäß FR-PS 2 050 322 werden aus Acrylgruppen-haltigen aromatischen Oligocarbonaten unlösliche Produkte und gemäß US-PS 3 164 564 aus Mischungen von Allylgruppen-haltigen Polycarbonaten mit Methyl-methacrylaten ebenfalls unlösliche Produkte, somit in allen drei Fällen vernetzte Produkte erhalten.

US-PS 3 462 515 beschreibt eine radikalische Polymerisation von beispielsweise Styrol in Gegenwart von aromatischen Polycarbonaten, welche keine funktionelle Gruppen enthalten.

US-PS 4 005 037 beschreibt eine radikalische Polymerisation von Vinylchlorid auf aromatische Polycarbonate, wobei bevorzugt Tetramethylbisphenol-A-Polycarbonat als Ausgangsprodukt eingesetzt wird. Die Pfropfung kann hierbei nur erfolgen durch eine radikalische Übertragungsreaktion an den aromatischen Methylsubstituenten. Eine Pfropfung auf radikalisch polymerisierbare ungesättigte Gruppen des Polycarbonats gemäß vorliegender Erfindung liegt in US-PS 4 005 037 nicht vor.

US-PS 3 991 009 beschreibt Mischungen aus ABS-Polymerisaten mit Polycarbonat-Pfropfpolymeren, wobei letztere hergestellt werden durch Phasengrenzflächenpolykondensation von Polycarbonaten in Gegenwart von phenolische OH-Gruppen-haltigen Vinylpolymerisaten. Herstellung und Struktur der Polycarbonat-Pfropfpolymeren sind klar verschieden von denen der vorliegenden Erfindung. Entsprechendes gilt für US-PS 3 856 886. US-PS 3 687 895 beschreibt die Polycarbonat-Pfropfpolymeren, die in den Mischungen gemäß US-PS 3 991 009 und US-PS 3 856 886 zum Einsatz kommen.

US-PS 3 670 051 beschreibt ebenfalls Polycarbonat-Pfropfpolymere, deren Herstellung und Struktur von denen der Pfropfpolycarbonate der vorliegenden Erfindung völlig verschieden sind.

US-PS 3 461 187 beschreibt die Herstellung von Polycarbonaten in homogener Lösung in Anwesenheit von Carboxylgruppen-haltigen Polymerisaten.

Hierdurch entstehen gepfropfte Vinylpolymere, deren aufgepfropfte Polycarbonatketten mit dem einem Kettenende mit dem Vinylpolymerisat über Carboxylester-Gruppen verknüpft sind, während das jeweilige andere Polycarbonatkettenende mit dem eingesetzten Kettenregler, beispielsweise mit Phenol (siehe beispielsweise Beispiel 4 der US-PS 3 461 187) abgebrochen wird.

Die für das erfindungsgemäße Verfahren erforderlichen aromatischen Polycarbonate sind insbesondere durch die allgemeine Formel II charakterisiert

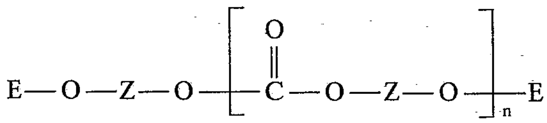

(II)

in der Z = ein Rest eines Diphenols, vorzugsweise mit 6 bis 30 C-Atomen, n = eine ganze Zahl von 30—100, bevorzugt von 40—80 und in der für die gesättigte Endgruppe IIIb und für die ungesättigte Endgruppe IIIa steht, mit der Maßgabe, daß im Mittel pro Polycarbonatmolekül mindestens eine ungesättigte, radikalisch polymerisierbare Endgruppe bis maximal zwei ungesättigte, radikalisch polymerisierbare Endgruppen vorhanden sind. In IIIa

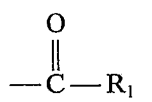 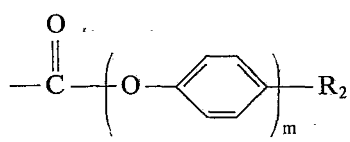

(IIIa) (IIIb)

ist $R_1$

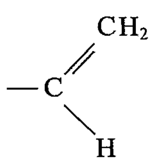 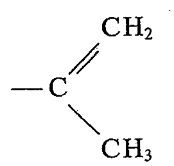 oder 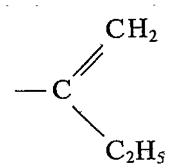

Gesättigte Endgruppen E im Sinne der vorliegenden Erfindung sind solche der Formel IIIb, in denen m Null und $R_2$ $C_1-C_{18}$-Alkyl oder m 1 und $R_2 = H$, Alkyl, wie beispielsweise $CH_3$, tert.-$C_4H_9$, oder Halogen, wie Cl oder Br, sind.

Die für das erfindungsgemäße Verfahren zu verwendenden aromatischen Polycarbonate können nach üblichen Verfahren sowohl in homogener als auch in heterogener Phase und durch Schmelzumesterung hergestellt werden.

Die für das erfindungsgemäße Verfahren zu verwendenden aromatischen Polycarbonate haben in der Regel Molekulargewichte (Zahlenmittel $\overline{M}n$, gemessen durch Membranosmose) von 7000—25 000, bevorzugt von 10 000—20 000.

Sie werden hergestellt vorzugsweise durch Umsetzung von Diphenolen und Phosgen in einem heterogenen Gemisch aus wäßriger Natronlauge und organischen Lösungsmitteln, wie z. B. Methylenchlorid oder Chlorbenzol, in Anwesenheit von Verbindungen der Formel IVa und gegebenenfalls der Formel IVb

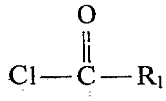 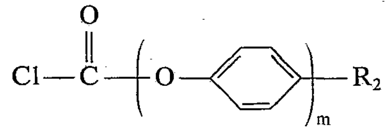

(IVa) (IVb)

worin $R_1$, $R_2$ und m die für Formel IIIa bzw. IIIb angegebene Bedeutung haben, und worin das molare Verhältnis der jeweils eingesetzten Mole Verbindungen IVa zur molaren Summe der jeweils eingesetzten Mole Verbindungen IVa+IVb mindestens $^1/_2$ und maximal 1 ist. Anstelle der Chlorkohlensäureester IVb können auch die entsprechenden phenolischen Komponenten der Formel Vb eingesetzt werden

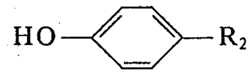

(Vb)

worin $R_2$ die für Formel IIIb m = 1 genannte Bedeutung hat.

Zur Herstellung der für das erfindungsgemäße Verfahren einsetzbaren aromatischen Polycarbonate sind beispielsweise folgende Diphenole im Sinne von Formel II geeignet, aus denen die oben genannten Diphenolreste Z resultieren.

Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-äther, Bis-(hydroxyphenyl)-sulfoxide, Bis-(hydroxyphenyl)-sulfone, Bis-(hydroxyphenyl)-ketone, α,α-Bis-(hydroxypheny)-diisopropylbenzole, sowie deren kernalkylierte und kernhalogenierte verbinden.

Diese und weitere geeignete Diphenole sind z. B. in den US-Patentschriften 3 028 365, 2 999 835, 3 148 172, 3 271 368, 2 991 273, 3 271 367, 3 280 078, 3 014 891 und 2 999 846, in den Deutschen Offenlegungsschriften 1 570 703, 2 063 050, 2 063 052, 2 211 956, 2 211 957, der Französischen Patentschrift 1 561 518 und in der Monographie »H. Schnell, Chemistry and Physics of Polycarbonates, Interscience Publishers, New York, 1964, beschrieben.

Bevorzugte Diphenole sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete polymerisierbare Doppelbindungen enthaltende monofunktionelle Kettenregler gemäß Formel IVa sind z. B. Acrylsäurechlorid und Methacrylsäurechlorid.

Geeignete gesättigte Kettenregler der Formel IVb sind beispielsweise Acetylchlorid, Stearylchlorid, Phenylchlorkohlensäureester, geeignete gesättigte Kettenregler der Formel Vb sind beispielsweise Phenol, p-Methylphenol, p-tert.-Butylphenol, p-Chlorphenol und p-Bromphenol.

Die Menge an Kettenreglern zur Herstellung der Ausgangspolycarbonate berechnet sich aus dem erwünschten Molekulargewicht und zwar für den Fachmann in einfacher Weise, da die Umsetzung des Kettenreglers quantitativ verläuft. Die Menge an Kettenregler beträgt zwischen 7 Mol-% und 2 Mol-%, bezogen auf Mole an jeweils eingesetzten Diphenolen.

Für die erfindungsgemäße Herstellung der Pfropfpolyxcarbonate kommen in erster Linie Vinylmonomere und Acrylmonomere in Betracht.

Als Vinylmonomere im vorliegenden Zusammenhang sind beispielsweise zu verstehen:

Vinylacetat, Vinylbenzoat, Vinylisobutyläther, Styrol, Vinyltoluol, 2,4-Dimethylstyrol, Chlor oder Bromstyrol, α-Methylstyrol Vinylchlorid, Vinylidenchlorid sowie Äthylen, Propylen und Butadien.

Als Acrylmonomere im vorliegenden Zusammenhang sind zu verstehen Acrylsäure, Acrylamid, Methacrylamid, N-Methoxymethacrylamid, Acrylnitril, Methacrylnitril, (Meth)-acrylsäureester, z. B. Methylmethacrylacrylat, Äthylacrylat, Butylacrylat, n-Hexylacrylat, Cyclohexylmethacrylat und Glycidylmethacrylat.

Die radikalisch polymerisierbaren Monomeren können für sich allein sowie in Kombination miteinander gemäß dem erfindungsgemäßen Verfahren eingesetzt werden.

Die Polymerisation der Monomeren mit den radikalisch polymerisierbare Endgruppen enthaltenden aromatischen Polycarbonaten erfolgt vorzugsweise durch Lösungspolymerisation in inerten Lösungsmitteln bei Temperaturen im Bereich von 30—100°C mit für die radikalische Polymerisation geeignete Initiatoren. Zur Vermeidung von Vernetzungsreaktionen können entweder die für radikalische Polymerisationen üblichen Kettenregler oder Polycarbonate mit im Mittel pro Polycarbonatmolekül nur einer ungesättigten, radikalisch polymerisierbaren Endgruppe eingesetzt werden.

Bevorzugte Lösungsmittel sind: Benzol, Chlorbenzol oder Toluol sowie Mischungen daraus. Bevorzugte Reaktionstemperaturen liegen im Bereich von 50—90°C und bevorzugte Radikalbildner sind Peroxyde und Azoverbindungen wie Benzylperoxyd oder Azodiisobuttersäurenitril. Als Kettenregler für die radikalische Polymerisation kann z. B. Dodecylmercaptan eingesetzt werden.

Bei der erfindungsgemäßen Verfahrensführung zur Herstellung der Pfropfpolycarbonate muß folgendes beachtet werden: Die Konzentration der Reaktanten (radikalisch polymerisierbare Endgruppen enthaltende Polycarbonate und Monomere) in dem Reaktionsmedium darf höchstens 30 Gew.-% bezogen auf das Gesamtgewicht aus Reaktanten und Reaktionsmedium betragen. Die Reaktionsführung wird so gesteuert bezüglich Radikalbildner, Reaktionstemperatur, Reaktionszeit, Konzentration und Kettenregler, daß in dem Endprodukt Molekulargewichte (Gewichtsmittel, $\overline{M}w$, gemessen durch Lichtzerstreuung) im Bereich von 30 000—400 000, vorzugsweise 30 000—200 000, entstehen.

Das Reaktionsprodukt ist zum überwiegenden Teil ein Pfropfpolymerisat aus (PC)- und

(PM)-Segmenten. Darüberhinaus können aber auch untergeordnete Mengen an Polymerisaten aus den radikalisch polymerisierbaren Monomeren vorliegen die nicht an das Polycarbonat Segment geknüpft sind.

Im Falle, daß neben den Pfropfpolycarbonaten untergeordnete Mengen an Polymerisaten entstehen, verstehen sich die vorstehend genannten Molekulargewichtsbereiche als Mittelwerte, bezogen auf das Gesamtgemisch an Polymeren.

Für eine optimale Durchführung des erfindungsgemäßen Verfahrens ist ein Konzentrationsbereich von 10—20 Gew.-%, bezogen auf das Gesamtgewicht an Reaktanten und Reaktionsmedium, wünschenswert.

Das Verhältnis der Ausgangspolycarbonate zu den radikalisch polymerisierbaren Monomere kann in der erfindungsgemäßen Pfropfreaktion in weiten Grenzen variiert werden und richtet sich primär nach der gewünschten Zusammensetzung im Pfropfendprodukt. Da die Reaktion im wesentlichen quantitativ verläuft, stimmt somit das Gewichtsverhältnis der Reaktanten mit dem Gewichtsverhältnis der eingesetzten Stoffe im Endprodukt im wesentlichen überein.

Das Gewichtsverhältnis der Ausgangspolycarbonate zu den radikalisch polymerisierbaren Monomeren beträgt somit von 70 : 30 bis 10 : 90 variieren. Das bevorzugte Reaktanten-Gewichtsverhältnis soll zwischen 70 : 30 und 40 : 60 liegen, besonders bevorzugt ist ein Reaktantenverhältnis von 65 : 35 bis 45 : 55.

Die Isolierung des erfindungsgemäßen Pfropfpolycarbonats erfolgt entweder durch Ausfällen der Polymerlösungen mit Fällungsmitteln wie Methanol, Cyclohexan oder Petroläther oder durch Abdampfen des für die radikalische Polymerisation eingesetzten Lösungsmittel in z. B. Ausdampfextrudern.

Das Eigenschaftsbild der Pfropfpolycarbonate richtet sich nun einerseits nach den gewünschten Anteilen der PC- bzw. PM-Segmente und andererseits nach dem im Endprodukt erzielten Molekulargewicht.

Die erfindungsgemäß erhältlichen Pfropfpolycarbonate vereinigen die guten Polycarbonat-Eigenschaften wie Schlagzähigkeit, Kerbschlagzähigkeit und Wärmeformbeständigkeit mit den guten Eigenschaften der Polymerisate wie Hydrolysestabilität, Verarbeitungsverhalten und Witterungsstabilität.

Überraschend ist jedoch, daß die erfindungsgemäß erhältlichen Polycarbonate eine gute Löslichkeit in für herkömmliche Polycarbonate geeigneten Lösungsmitteln wie Methylenchlorid und Chlorbenzol haben und somit als verzweigte aber nicht vernetzte Polymere thermoplastisch in einem weiten Temperaturbereich verarbeitbar sind, beispielsweise können sie zu beliebigen Formteilen und Folien verspritzt bzw. extrudiert werden.

Den erfindungsgemäß erhältlichen Pfropfpolycarbonaten können in bekannter Weise die üblichen für Polycarbonat und Vinylpolymerisate bekannten Additive wie z. B. Hitzestabilisatoren, UV-Stabilisatoren und Flammschutzmittel sowie Verstärkerfüllstoffe, wie z. B. Glasfasern oder Asbest, zugemischt werden.

Der Erfindungsgegenstand soll durch folgende Beispiele noch erläutert werden.

Herstellung der Ausgangspolycarbonate

Beispiel 1) Polycarbonat aus 97 Mol-% 4,4'-Dihydroxydiphenylpropan (Bisphenol A) und 3 Mol-% Methacrylsäurechlorid mit einer relativen Lösungsviskosität von 1,30 gemessen in Methylenchlorid bei 25°C und einer Konzentration von 5 g/1. Das durch Membranosmose gemessene Molekulargewicht $\overline{M}n$ liegt bei 13 800.

Beispiel 2) wie 1, nur 1,5 Mol-% Methacrylsäurechlorid und
1,5 Mol-% p-tert.-Butylphenol
$\eta_{rel.}$ = 1,295, das durch Membranosmose gemessene Molekulargewicht $\overline{M}n$ liegt bei 13 500.

Herstellung der Pfropfpolycarbonate

4000 g Chlorbenzol werden vorgelegt und darin bei 90°C 500 g des ungesättigten Endgruppen enthaltenden Polycarbonats aus Beispiel 1 gelöst. Nach vollständiger Lösung werden 360 g Styrol, 140 g Acrylnitril und 10 g Azodiisobuttersäurenitril (ADBN) zugegeben. Die Reaktionstemperatur wird auf 80°C gehalten. Um einen 100%igen Umsatz zu garantieren, wird alle 30 Minuten 1 g ADBN zugegeben. Nach 6stündiger Reaktionszeit wird ein 100%iger Umsatz erreicht. Die relative Lösungsviskosität gemessen in Methylenchlorid bei 25°C und einer Konzentration von 5 g/l liegt bei 1,40. Das durch Lichtzerstreuung in Chlorform gemessene Molekulargewicht liegt bei 65 000.

In der folgenden Tabelle sind einige weitere Beispiele angegeben, wobei die Menge an Chlorbenzol bzw. Polycarbonat und radikalisch polymerisierbare Monomere sowie Initiator aus der Tabelle zu entnehmen sind.

| | Beispiel | | |
|---|---|---|---|
| | 4 | 5 | 6 |
| Polycarbonat aus Beispiel 1, Gew.-Teile | 1000 | 1300 | – |
| Polycarbonat aus Beispiel 2, Gew.-Teile | – | – | 1050 |
| Chlorbenzol, Gew.-Teile | 8000 | 8000 | 8000 |
| Styrol, Gew.-Teile | 720 | 504 | 504 |
| Acrylnitril, Gew.-Teile | 280 | 196 | 196 |
| Methylmethacrylat, Gew.-Teile | – | – | – |
| Summe ADBN, Gew.-Teile | 40 | 40 | 45 |
| Reaktionstemperatur, °C | 80 | 80 | 80 |
| Reaktionszeit, h, 100% Umsatz | 6 | 5 | 12 |
| Relative Lösungsviskosität | 1,40 | 1,38 | 1,53 |
| $M_w$ (Lichtzerstreuung) gemessen in Chloroform | 65 000 | 71 000 | 180 000 |

**Patentansprüche**

1. Verfahren zur Herstellung von löslichen thermoplastischen Pfropfpolycarbonaten mit Molekulargewichten (Gewichtsmittel $\overline{Mw}$) von 30 000 bis 400 000, dadurch gekennzeichnet, daß man aromatische Polycarbonate mit im Mittel pro Polycarbonatmolekül mindestens einer ungesättigten Endgruppe, die der Formel II entsprechen.

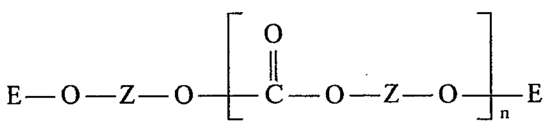

(II)

worin Z = ein Rest eines Diphenols, n = eine ganze Zahl von 30 bis 100 und E der gesättigten Endgruppe der Formel IIIb oder der ungesättigten Endgruppe der Formel IIIa entspricht,

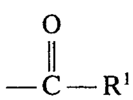

(IIIa)

bzw.

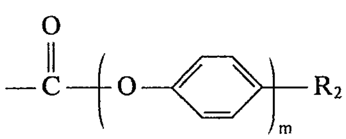

(IIIb)

in der für IIIa $R_1$ =

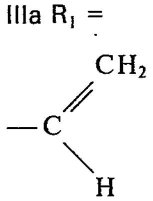

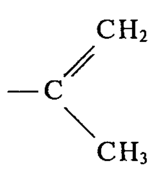

oder

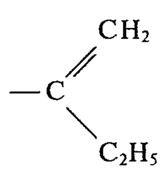

und in der für IIIb m Null und $R_2$ $C_1-C_{18}$-Alkyl oder m 1 und $R_2$=H, Alkyl oder Halogen sind, in Gegenwart eines radikalisch polymerisierbaren Monomeren mittels Lösungspolymerisation polymerisiert, wobei das Gewichtsverhältnis des Ausgangspolycarbonats zu den radikalisch polymerisierbaren Monomeren von 70 : 30 bis 10 : 90 beträgt und wobei die Konzentration der Reaktionslösung an Reaktanten 30 Gew.-%, bezogen auf das Gesamtgewicht aus Polycarbonat mit ungesättigten Endgruppen, radikalisch polymerisierbaren Monomeren und Reaktionsmedium, nicht übersteigt.

2. Verfahren gemäß Anspruch 1, dadurch gekennzeichnet, daß man aromatische Polycarbonate mit im Mittel pro Polycarbonatmolekül nur einer ungesättigten Endgruppe polymerisiert.

3. Pfropfpolycarbonate erhältlich gemäß Verfahren der Ansprüche 1 und 2.

**Claims**

1. Process for the production of soluble thermoplastic graft polycarbonates with molecular weights (weight average Mw) of 30,000 to 400,000, characterised in that aromatic polycarbonates with on average at least one unsaturated end group per polycarbonate molecule, which correspond to the formula II

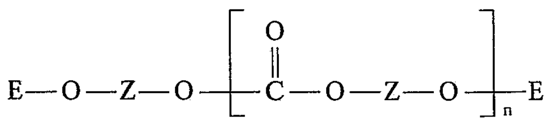

(II)

wherein

Z = a radical of a diphenol,
n = an integer from 30 to 100 and
E represents the saturated end group of formula IIIb or the unsaturated end group of formula IIIa

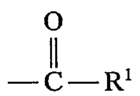

(IIIa)

or

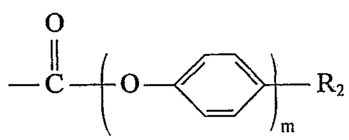

(IIIb)

in which

in IIIa $R_1$ =

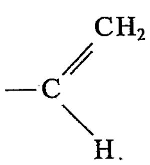 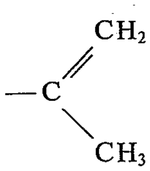 or 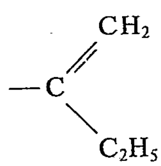

and in which

in IIIb m is zero and
$R_2$ is $C_1-C_{18}$-alkyl or
m is 1 and
$R_2$ is H, alkyl or halogen,

are polymerised by means of solution polymerisation in the presence of a monomer which can be polymerised under free radical conditions, during which the weight ratio of the starting polycarbonate to the monomers which can be polymerised under free radical conditions is from 70 : 30 to 10 : 90, and during which the concentration of the reactants in the reaction solution does not exceed 30% by weight, relative to the total weight of polycarbonate with unsaturated end groups, monomers which can be polymerised under free radical conditions and reaction medium.

2. Process according to Claim 1, characterised in that aromatic polycarbonates with on average only one unsaturated end group per polycarbonate molecule are polymerised.

3. Graft polycarbonates obtainable by the process of Claims 1 and 2.

**Revendications**

1. Procédé de production de polycarbonates greffés thermoplastiques solubles de poids moléculaires (moyenne en poids $\bar{M}p$) de 30 000 à 400 000, caractérisé en ce qu'on polymérise des polycarbonates aromatiques ayant en moyenne, par molécule de polycarbonate, au moins un groupe terminal non saturé, qui répondent à la formule II:

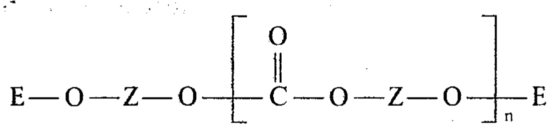

(II)

où Z est un reste d'un diphénol, n est un nombre entier de 30 à 100 et E correspond au groupe terminal saturé de formule IIIb ou au groupe terminal non saturé de formule IIIa:

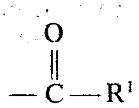

(IIIa)

et

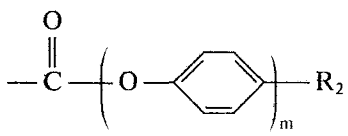

(IIIb)

où pour IIIa $R_1$ =

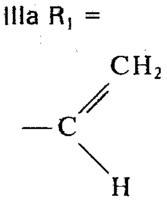

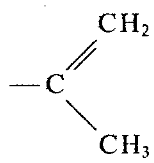

ou

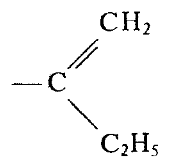

et où, pour IIIb, m est égal à O et $R_2$ est un reste alkyle en $C_1$ à $C_{18}$ ou m est égal à 1 et $R_2$ est l'hydrogène, un radical alkyle ou un halogène, en présence d'un monomère susceptible de polymérisation radicalaire, par polymérisation en solution, le rapport en poids du polycarbonate de départ aux monomères susceptibles de polymérisation radicalaire s'élevant de 70 : 30 à 10 : 90 et la concentration en corps réactionnels dans la solution de réaction ne dépassant pas 30% en poids par rapport au poids total de polycarbonate à groupes terminaux non saturés, de monomères susceptibles de polymérisation radicalaire et de milieu de réaction.

2. Procédé suivant la revendication 1, caractérisé en ce qu'on polymérise des polycarbonates aromatiques acec en moyenne, par molécule de polycarbonate, un seul groupe terminal non saturé.

3. Polycarbonates greffés pouvant être obtenus par le procédé des revendications 1 et 2.